# FASCICULE DE BREVET EUROPEEN

(11) **EP 2 007 995 B1**
(45) Date de publication et mention de la délivrance du brevet: **18.01.2012**
(21) Numéro de dépôt: 07731902.8
(22) Date de dépôt: 18.04.2007
(51) Int. Cl.: F16D 3/38, B62D 1/16

(54) **MÂCHOIRE EMBOUTIE DE CARDAN D'UNE COLONNE DE DIRECTION DE VÉHICULE AUTOMOBILE**
GEPRESSTE GELENKGABEL FÜR KRAFTFAHRZEUGLENKSÄULENKARDANGELENK
PRESSED JOINT YOKE FOR A MOTOR VEHICLE STEERING COLUMN UNIVERSAL JOINT

(30) Priorité: 19.04.2006 FR 0603688
(43) Date de publication de la demande: 31.12.2008
(73) Titulaire: ZF Systemes de Direction Nacam, S.A.S., 41100 Vendome (FR)
(72) Inventeur: LAISEMENT, André, F-41290 La Chapelle Encherie (FR); LOYAU, Jacques, F-41310 Saint Amand Longpre (FR); MILLET, Pascal, F-41100 Vendôme (FR)
(74) Mandataire: Lapoux, Roland
(86) Numéro de dépôt international: PCT/FR2007/051126
(87) Numéro de publication internationale: WO 2007/119026

(56) Documents cités:
- FR-A1- 2 441 759
- FR-A1- 2 525 130

## Description

La présente invention se rapporte à une mâchoire de cardan emboutie, qui est notamment utilisée dans les colonnes de direction de véhicule automobile, et plus particulièrement dans les colonnes de direction munies d'un dispositif d'assistance.

La colonne de direction actuelle d'un véhicule automobile comporte deux portions : une portion haute qui est reliée au volant de direction, et une portion intermédiaire qui est reliée au boîtier de direction commandant une tige de direction des roues directrices. La portion haute et la portion intermédiaire sont reliées l'une à l'autre par un joint homocinétique appelé joint de cardan.

La portion intermédiaire est également reliée au pignon du boîtier de direction par un joint homocinétique ou joint de cardan. Chacun des deux joints de cardan comprend un croisillon disposé entre deux mâchoires. Pour le joint de cardan de la portion haute, une des mâchoires est raccordée à la portion haute et l'autre est raccordée à la portion intermédiaire.

Pour le joint de cardan du pignon de direction, une des mâchoires est raccordée à la portion intermédiaire et l'autre est raccordée au pignon de direction.

Lorsque la colonne de direction comporte un dispositif d'assistance, celui-ci peut être constitué d'un système électrique ou d'un système hydraulique.

Pour ces deux systèmes, il y a deux types de direction assistée suivant la disposition du dispositif d'assistance : soit le dispositif d'assistance est disposé sur la partie haute de colonne de direction, c'est la direction assistée sur colonne, soit le dispositif d'assistance est disposé directement sur la crémaillère de direction, c'est la direction assistée sur pignon, qui fait référence au pignon de direction entraînant la crémaillère.

Dans le cas de la direction assistée électrique ou hydraulique, il y a un couple élevé à transmettre en sortie d'assistance c'est-à-dire en sortie de mouvement de la partie haute de colonne.

Le couple élevé est donc à transmettre en amont de la partie intermédiaire de colonne, c'est-à-dire en amont de chacun des deux joints de cardan de transmission qui sont disposés à chaque extrémité de la partie intermédiaire de colonne, d'une part du côté de la partie haute de colonne et d'autre part du côté du pignon de direction. Chaque joint de cardan de transmission comprenant deux mâchoires de cardan, il y a donc au total quatre mâchoires de cardan qui doivent pouvoir transmettre un couple élevé.
Dans le cas de la direction assistée électrique sur pignon, et dans le cas de la direction assistée hydraulique sur pignon, le couple élevé s'applique directement sur la crémaillère. Le couple transmis par la partie haute de colonne et par la partie intermédiaire de colonne est donc relativement faible. Il en est de même pour les quatre mâchoires de cardan, qui transmettent un couple relativement peu élevé.
Il existe des mâchoires de cardan embouties comme celle représentée et référencée 10 sur la figure 5, qui est obtenue par la déformation d'une tôle épaisse sans modification de l'épaisseur. Pour cela, un flan est découpé dans la tôle, dont l'épaisseur est conditionnée par ses capacités d'allongement afin de lui donner sa forme définitive par emboutissage. La mâchoire de cardan 10 est montée et bloquée sur un arbre de transmission 5 non représenté dont l'axe de transmission est référencé 6. Le système de serrage est assuré par une vis ayant un axe de serrage 4, ladite vis de serrage se montant sur deux pinces 111 et 112 afin de les rapprocher l'une de l'autre pour réaliser le blocage de la mâchoire 10 sur l'arbre de transmission 5. Afin d'obtenir les pinces 111 et 112, la tôle est repliée sur elle-même. Dans le cas où il y a un couple de serrage élevé et un couple de rotation élevé sur l'arbre de transmission, il se produit un glissement entre les deux portions l'une par rapport à l'autre de chacune des deux pinces 111 et 112. Ce glissement entraîne un desserrage de la vis de serrage et une prise de jeu entre l'arbre de transmission 5 et la mâchoire 10. Dans le cas d'un serrage trop fort, il y a un contact entre les retours de pince, ce qui entraîne un manque de serrage sur l'arbre de transmission.
Par le document FR 2441759 sur lequel est basé le préambule de la revendication 1, on connaît également la réalisation d'une mâchoire de cardan à partir d'un flan de tôle ayant des appendices de renforcement prévus dans celle-ci. La mâchoire est obtenue par roulage du flan et pliage des appendices pour réaliser des pattes d'appui pour un arbre.
Le but de la présente invention est de proposer une mâchoire de cardan emboutie, notamment pour une colonne de direction de véhicule automobile munie d'un dispositif d'assistance, qui évite les inconvénients décrits ci-dessus, afin d'avoir une mâchoire de cardan, qui permette de passer des couples d'entraînement en rotation et de serrage sur l'arbre de transmission plus importants ; c'est-à-dire que la mâchoire de cardan ait une fonction de taraudage pour le serrage suffisante ; et une fonction de réaction suffisante pour la tenue de l'arbre de transmission, c'est-à-dire qu'elle ait des performances plus importantes dans certaines zones.
De plus, la mâchoire de cardan emboutie devra avoir un encombrement et un poids sensiblement équivalent, ou même plus faible.

Selon l'invention, la mâchoire de cardan d'un arbre de transmission de mouvement, est du type comprenant un axe d'articulation de la mâchoire et un axe de serrage sur l'arbre de transmission, ladite mâchoire étant constituée d'une seule pièce monobloc réalisée par emboutissage et obtenue par la déformation d'une tôle dont l'épaisseur est définie pour respecter les fonctions de tenue et de résistance dans des zones à faible contrainte, et comportant:
- une fourche d'articulation constituée par deux bras d'articulation comportant chacun un trou de passage dont l'axe est l'axe d'articulation du croisillon,
- un élément de raccordement à l'arbre de transmission de mouvement, ledit élément de raccordement étant constitué par deux portions de serrage reliées l'une à l'autre par une portion de jonction, chacune des deux portions de serrage comportant un trou de serrage dont l'axe est l'axe de serrage, et
- des appendices pour renforcer des zones à forte contrainte dudit élément de raccordement,
et ladite mâchoire est remarquable par le fait que lesdits appendices de renforcement sont réalisés, après emboutissage, à partir de surplus de matière prévus dans ladite tôle avant emboutissage à proximité des zones à renforcer, et lesdits appendices sont agencés à proximité d'une face transversale d'extrémité correspondante dudit élément de raccordement, de manière que la déformation par emboutissage de ladite tôle se fasse sans rupture des fibres de la matière la constituant, sans aucun pliage desdits appendices formées issus des surplus de matière, afin que ladite mâchoire soit constituée uniquement de fibres continues, avec l'épaisseur désirée, pour chacune des zones à forte contrainte et à faible contrainte.

Selon l'invention, ladite mâchoire de cardan comporte au moins un appendice de renforcement disposé sur une portion de serrage au voisinage du trou de serrage.
Selon une variante de réalisation de l'invention, ladite mâchoire de cardan comporte deux appendices de renforcement, chaque appendice de renforcement étant disposé sur la portion de serrage correspondante au voisinage et du même côté du trou de serrage, de manière à se faire face l'un par rapport à l'autre.
Selon une autre variante de réalisation de l'invention, ladite mâchoire de cardan comporte deux appendices de renforcement, qui sont disposés sur la même portion de serrage au voisinage et de part et d'autre du trou de serrage.
Selon une autre variante de réalisation de l'invention, ladite mâchoire de cardan comporte deux appendices de renforcement, un appendice de renforcement étant disposé sur une des portions de serrage au voisinage et d'un côté du trou de serrage, l'autre appendice de renforcement étant disposé sur l'autre portion de serrage au voisinage et de l'autre côté du trou de serrage.
Selon une autre variante de réalisation de l'invention, ladite mâchoire de cardan comporte :
- deux appendices de renforcement, chaque appendice de renforcement étant agencé par emboutissage sur la portion de serrage correspondante au voisinage et du même côté du trou de serrage, de manière à se faire face l'un par rapport à l'autre, et à proximité de la face transversale d'extrémité,
- deux autres appendices de renforcement, chaque appendice de renforcement étant agencé par emboutissage sur la portion de serrage correspondante au voisinage et de l'autre côté du trou de serrage, de manière à se faire face l'un par rapport à l'autre, et à proximité de la face transversale d'extrémité.
Avantageusement, l'appendice de renforcement a une section évolutive qui diminue à partir de la portion de serrage sur lequel il est agencé, et il se trouve à proximité ou confondu avec la face transversale d'extrémité correspondante.
Afin d'améliorer les capacités de serrage, l'un des trous de serrage, destiné à recevoir un taraudage, est entouré d'un appendice de renforcement sur la face externe de la portion de serrage correspondante, ledit appendice de renforcement étant obtenu par soyage à partir d'un trou plus petit.
Selon l'invention, les deux appendices qui se font face constituent avec chacune des portions de serrage, et avec la portion de jonction, le logement de l'arbre de transmission de mouvement.
Préférablement, les deux appendices qui se font face et la portion de jonction ont leurs faces internes, qui sont circulaires et qui sont raccordées par chacune des faces internes des portions de serrage, de manière que ces faces internes aient des dimensions et des formes correspondantes aux dimensions et à la forme de l'arbre de transmission, qui comporte deux parties circulaires raccordées par deux méplats.

Selon un mode de réalisation particulièrement intéressant de l'invention, ladite mâchoire comporte :
- la fourche d'articulation qui est constituée par les deux bras d'articulation disposés de part et d'autre et symétriquement par rapport à l'axe de transmission de l'arbre, et comportant chacun le trou de passage dont l'axe est l'axe d'articulation,
- l'élément de raccordement qui est constitué par les deux portions de serrage disposées de part et d'autre et symétriquement par rapport à l'axe de transmission, et reliées l'une à l'autre par la portion de jonction, et comportant chacune le trou de serrage dont l'axe est l'axe de serrage,
- chacun des deux bras d'articulation étant décalé et raccordé à la portion de serrage correspondante en s'écartant de l'axe de transmission,
- les quatre appendices de renforcement, les deux appendices de renforcement se faisant face et disposés du même côté et à proximité du trou de serrage, les deux autres appendices de renforcement se faisant face, et disposés de l'autre côté et à proximité du trou de serrage, chacun des appendices de renforcement étant raccordé à la portion de serrage correspondante, de manière à réaliser avec la portion de jonction deux logements qui ont des formes internes conjuguées avec la forme de l'arbre de transmission,
- l'un des trous de serrage, destiné à recevoir un taraudage, est entouré d'un appendice de renforcement sur la face externe de la portion de serrage correspondante.

Le procédé de réalisation d'une mâchoire de cardan selon l'invention comporte les étapes ci-après :
- découpe d'une tôle épaisse avec un surplus de matière avec des formes pour les quatre appendices,
- traitement thermique adapté à la résistance recherchée,
- opération sur une presse transfert :
   1. décalage des deux bras d'articulation vers le haut,
   2. poinçonnage du trou de chacun des deux bras,
   3. déplacement de la matière par emboutissage vers la position voulue des quatre formes pour les appendices,
   4. poinçonnage de chacun des deux trous de serrage, l'un des deux trous ayant un diamètre de passage pour recevoir la vis, et l'autre trou étant plus petit pour réaliser l'appendice de renforcement obtenu par soyage avant taraudage,
   5. déplacement de la matière par soyage pour obtenir l'appendice de renforcement du trou de serrage,
   6. pliage vers le bas pour rapprocher les deux portions de serrage avec leur bras d'articulation correspondant les uns par rapport aux autres à 60° environ,
   7. frappe sur chacune des deux portions de serrage, pour avoir la forme définitive avec les deux portions de serrage et les deux bras d'articulation parallèles les uns par rapport aux autres.

Selon une application de l'invention, la mâchoire de cardan est disposée dans une colonne de direction à au moins une extrémité de la partie intermédiaire. Dans une variante de réalisation de cette application, la colonne de direction est à assistance électrique sur la partie haute de colonne.

La mâchoire de cardan emboutie selon l'invention présente ainsi l'avantage d'avoir une structure obtenue par la déformation d'une tôle, qui se fait sans rupture des fibres de la matière constituant cette tôle, afin que ladite mâchoire soit constituée uniquement de fibres continues, de manière à obtenir l'épaisseur désirée dans les encombrements demandés, pour chacune des zones à forte contrainte et à faible contrainte. Ainsi la mâchoire de cardan selon l'invention a une fonction de taraudage pour le serrage qui est suffisante, et a une fonction de réaction pour la tenue de l'arbre de transmission qui est également suffisante.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est une vue en perspective de la mâchoire de cardan emboutie selon l'invention, vue du côté de l'arbre de transmission ;
- la figure 2 est une vue en perspective de la mâchoire de cardan emboutie de la figure 1, vue du côté du croisillon ;
- la figure 3 est une vue de la découpe de tôle avant emboutissage ;
- la figure 4 est une vue de profil de la découpe de tôle de la figure 3 ;
- la figure 5 est une vue en perspective d'une mâchoire de cardan emboutie appartenant à l'état de la technique ; et
- la figure 6 est une vue schématique d'une presse transfert permettant la réalisation du procédé d'obtention de la mâchoire de cardan des figures 1 et 2.

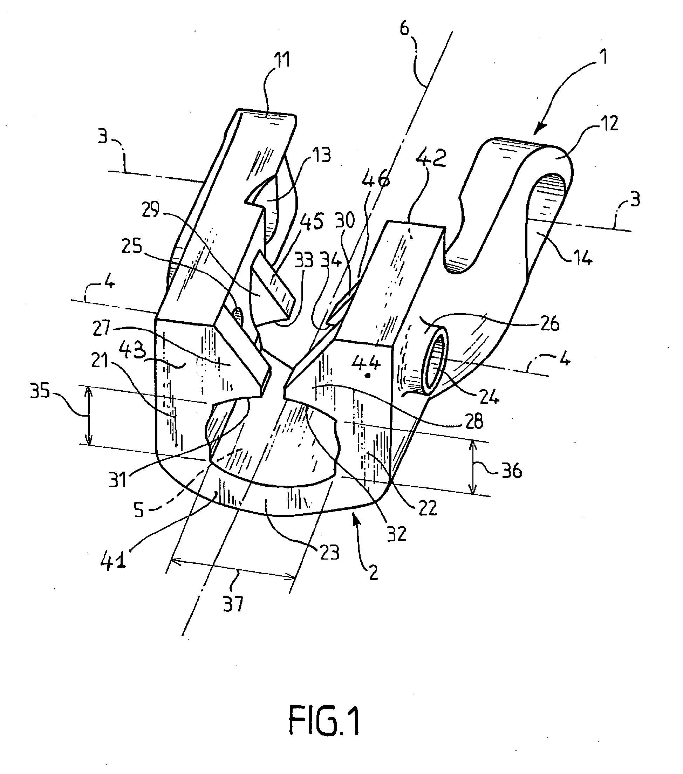

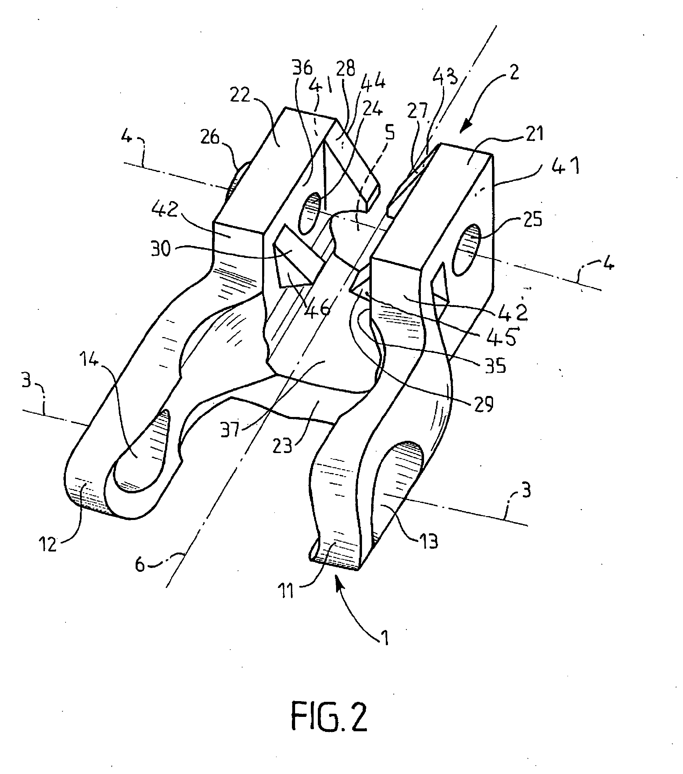

Comme cela est représenté sur les figures 1 et 2, la mâchoire de cardan d'un arbre de transmission de mouvement 5 selon l'invention comporte une fourche d'articulation 1 et un élément de raccordement 2 à l'arbre de transmission de mouvement 5, dont l'axe est l'axe de transmission de mouvement 6.
La fourche d'articulation 1 est constituée par deux bras d'articulation 11 et 12, qui sont disposés de part et d'autre et symétriquement par rapport à un plan vertical passant par l'axe de transmission 6. Les bras d'articulation 11 et 12 comportent respectivement des trous de passage 13 et 14, qui sont alignés suivant un même axe perpendiculaire au plan vertical de l'axe 6, qui est l'axe d'articulation 3 du croisillon du joint de cardan.
L'élément de raccordement 2 est constitué par deux portions de serrage 21 et 22, qui sont disposées de part et d'autre et symétriquement par rapport au plan vertical de l'axe 6. Les portions de serrage 21 et 22 sont reliées l'une à l'autre par une portion de jonction 23 et comportent respectivement des trous de serrage 25 et 24, qui sont alignés suivant un même axe perpendiculaire au plan vertical de l'axe 6, qui est l'axe de serrage 4 sur l'arbre de transmission 5. Ledit trou de serrage 24 est destiné à recevoir un taraudage et il est entouré d'un appendice de renforcement 26 disposé sur la face externe de la portion de serrage correspondante 22.
Dans la suite de la description, interne signifie ce qui est le plus près du plan vertical de l'axe 6, et externe correspond à ce qui est le plus éloigné.
L'appendice de renforcement 26 est obtenu par une opération dite de soyage à partir d'un trou plus petit.
Le trou de serrage 25 sert ainsi au passage d'une vis de serrage non représentée, qui vient se visser dans le trou taraudé 24 et dont la tête s'appuie contre la face externe de la portion de serrage 21.
La fourche d'articulation 1 a ses deux bras d'articulation 11 et 12, qui sont décalés et raccordés à la portion de serrage correspondante 21 et 22 en s'écartant de manière symétrique du plan vertical de l'axe 6.
L'élément de raccordement comporte quatre appendices de renforcement 27, 28, 29 et 30.
Les deux appendices de renforcement 27 et 28 sont agencés par emboutissage sur les portions de serrage 21 et 22 du même côté du trou de serrage 25 et 24 correspondant, de manière à se faire face l'un par rapport à l'autre.
L'appendice de renforcement 27 est situé sur la portion de serrage 21 au voisinage du trou de serrage 25, et l'appendice de renforcement 28 est situé sur la portion de serrage 22 au voisinage du trou de serrage 24.
Les deux appendices de renforcement 29 et 30 sont agencés par emboutissage sur les portions de serrage 21 et 22 de l'autre côté du trou de serrage 25 et 24 correspondant, de manière à se faire face l'un par rapport à l'autre. L'appendice de renforcement 29 est situé sur la portion de serrage 21 au voisinage du trou de serrage 25, et l'appendice de renforcement 30 est situé sur la portion de serrage 22 au voisinage du trou de serrage 24.
Chaque appendice de renforcement 27, 28, 29 et 30 a une section évolutive qui diminue à partir de la portion de serrage 21, 22 correspondante sur laquelle ledit appendice de renforcement est agencé. Chaque appendice de renforcement 27, 28, 29 et 30 est obtenu par emboutissage, c'est-à-dire sans aucun pliage.
Les deux appendices de renforcement 27 et 28, qui se font face, sont raccordés à la portion de serrage correspondante 21 et 22, de manière à constituer avec la portion de jonction 23 un logement de l'arbre de transmission de mouvement 5. Les deux appendices de renforcement 29 et 30, qui se font face sont raccordés à la portion de serrage correspondante 21 et 22, de manière à constituer avec la portion de jonction 23 un logement de l'arbre de transmission de mouvement 5.
Les deux logements ainsi constitués, ont des formes qui sont conjuguées avec la forme de l'arbre de transmission 5.
Les quatre appendices de renforcement 27, 28, 29 et 30 ont respectivement une face interne référencée 31, 32, 33 et 34. Les deux portions de serrage 21, 22 ont respectivement une face interne 35, 36 et la portion de jonction 23 a une face interne 37. Les faces internes 31, 32, 33 et 34 des appendices et la face interne 37 de la portion de jonction 23 sont des portions circulaires de même diamètre, la face interne 37 étant raccordée par chacune des faces internes 35, 36 plates des portions de serrage 21, 22, de manière que ces faces internes 31, 32, 33, 34, 35, 36 et 37 aient des dimensions et des formes correspondantes aux dimensions et à la forme de l'arbre de transmission de mouvement 5, qui comporte deux parties circulaires raccordées par deux méplats.
D'autres formes conjuguées pourraient être agencées, tout en restant dans le cadre de l'invention.
Dans une variante de réalisation de l'invention, la mâchoire de cardan comporte un seul appendice de renforcement 27, 28, 29 ou 30, qui est disposé sur la portion de serrage 21 ou 22 au voisinage du trou de serrage 25 ou 24.
Dans une autre variante de réalisation, ladite mâchoire de cardan comporte deux appendices de renforcement 27, 28 ou 29, 30. Chaque appendice de renforcement est disposé sur la portion de serrage correspondante 21, 22 au voisinage et du même côté du trou de serrage 25, 24, de manière à se faire face l'un par rapport à l'autre.
Dans une autre variante de réalisation, ladite mâchoire de cardan comporte deux appendices de renforcement 27, 29 ou 28, 30. Les deux appendices sont disposés sur la même portion de serrage 21 ou 22 au voisinage et de part et d'autre du trou de serrage 25 ou 24.
Dans une autre variante de réalisation, ladite mâchoire de cardan comporte deux appendices de renforcement 27, 30 ou 28, 29. Un appendice de renforcement 27, 29 ou 28, 30 est disposé sur une des portions de serrage 21 ou 22 au voisinage et d'un côté du trou de serrage 25, 24. L'autre appendice de renforcement 30, 28 ou 29, 27 est disposé sur l'autre portion de serrage 22, 21 au voisinage et de l'autre côté du trou de serrage 24, 25. Ainsi dans cette variante de réalisation, il y a deux cas : le premier cas avec les deux appendices 27 de la portion de serrage 21 et 30 de la portion de serrage 22, qui sont décalés l'un par rapport à l'autre ; et le deuxième cas avec les deux appendices 28 de la portion de serrage 22 et 29 de la portion de serrage 21 qui sont décalés l'un par rapport à l'autre.

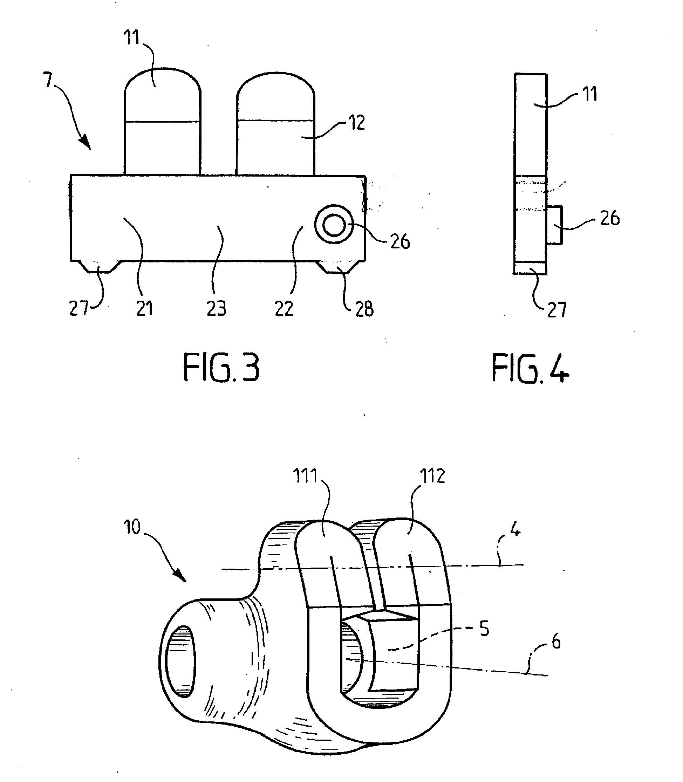

Selon l'invention, la mâchoire de cardan est constituée d'une seule pièce monobloc, qui est réalisée par emboutissage. Ladite mâchoire est obtenue par la déformation d'une découpe de tôle 7 représentée sur les figures 3 et 4. La tôle 7 a une épaisseur, qui est définie pour respecter les fonctions de tenue et de résistance dans les zones de la mâchoire, qui subissent des efforts relativement peu élevés entraînant de faibles contraintes.
Ladite tôle 7 comporte un surplus de matière 27 et 29 sur chacun de deux des côtés de la portion de serrage 21, et un surplus de matière 28 et 30 sur chacun de deux des côtés de la portion de serrage 22. Les deux portions de serrage 21 et 22 sont reliées par la portion de jonction 23 qui forment toutes les trois une découpe rectangulaire sur laquelle sont agencées, de l'autre côté des surplus de matière 27 et 28, deux découpes 11 et 12 ayant la forme des deux bras d'articulation.
L'appendice de renforcement 26 représenté sur les figures 3 et 4 ne fait pas partie de la découpe de la tôle 7, mais est obtenu par soyage comme cela sera décrit ci-après dans le procédé de fabrication.
Les surplus de matière sont disposés à proximité des zones, qui subissent des efforts élevés entraînant de fortes contraintes, de manière à obtenir par emboutissage les appendices de renforcement 27, 28, 29 et 30.
La déformation de ladite tôle 7 se fait selon le procédé décrit ci-après, c'est-à-dire sans rupture des fibres de la matière constituant cette tôle, afin que ladite mâchoire soit constituée uniquement de fibres continues, de manière à obtenir l'épaisseur désirée dans les encombrements demandés, pour chacune des zones à forte contrainte et à faible contrainte.
Les zones des portions de serrage 21 et 22 ont des faces internes 35 et 36, qui sont en contact avec l'arbre de transmission de mouvement 5, elles transmettent le couple du volant de direction à la crémaillère de direction.
La zone de la portion de jonction 23 a une face interne 37 qui est un appui de positionnement de la mâchoire sur l'arbre de transmission 5.
Dans d'autres modes de réalisation non représentés, les faces internes 35, 36 et 37 sont réunies en une seule, qui a une forme cylindrique cannelée pour se monter sur un arbre cylindrique cannelé 5.
Les zones des trous de passage 13 et 14 sont les interfaces avec des douilles à aiguilles qui supportent le croisillon.
Les zones des appendices de renforcement 27 et 28 ont des faces internes 31 et 32, qui sont des appuis sur l'arbre de transmission 5 et servent de réaction à l'effort de serrage de la vis, afin que les pinces constituées par les appendices de renforcement 27 et 28 n'entrent pas en contact entre elles.
Les zones des appendices de renforcement 29 et 30 ont des faces internes 33 et 34, qui ont la même fonction que les zones des appendices 27 et 28 ; mais elles sont réparties de l'autre côté du passage de la vis de serrage et elles permettent un équilibrage de la reprise de l'effort de serrage.

La zone de l'appendice de renforcement 26 est destinée à donner une longueur de taraudage suffisante pour respecter le cahier des charges du client relatif au comportement au serrage et à la tenue du taraudage.

Dans la technique actuelle, pour avoir une mâchoire en tôle emboutie, la technologie employée est :
- soit de choisir une tôle épaisse dont on fera varier l'épaisseur par frappe ou laminage, ce qui implique des écrouissages importants dans les zones où ce n'es pas nécessaire puisque ce sont les moins épaisses,
- soit de replier la tôle sur elle-même comme dans la figure 5, ce qui limite les possibilités à un multiple de cette tôle, avec une zone non homogène ayant des caractéristiques affaiblies dans les portions de pliage des pinces 111 et 112, dont les fibres extérieures sont trop tendues.

Dans le procédé de l'invention décrit ci-après, le déplacement de la matière peut être obtenu par pressage, soyage, repoussage et se fera sans rupture des fibres de la matière afin d'obtenir l'épaisseur désirée dans les encombrements désirés.
Les outils employés, de forme appropriée au sens du déplacement souhaité s'utilisent sur les moyens de production actuels avec un coût très compétitif.
Toutes les zones avec surépaisseur sont placées dans les zones à fortes sollicitations et auront des caractéristiques de surface améliorées par le procédé de l'invention employé, qui provoque un durcissement par écrouissage lié au procédé de déplacement de la matière.

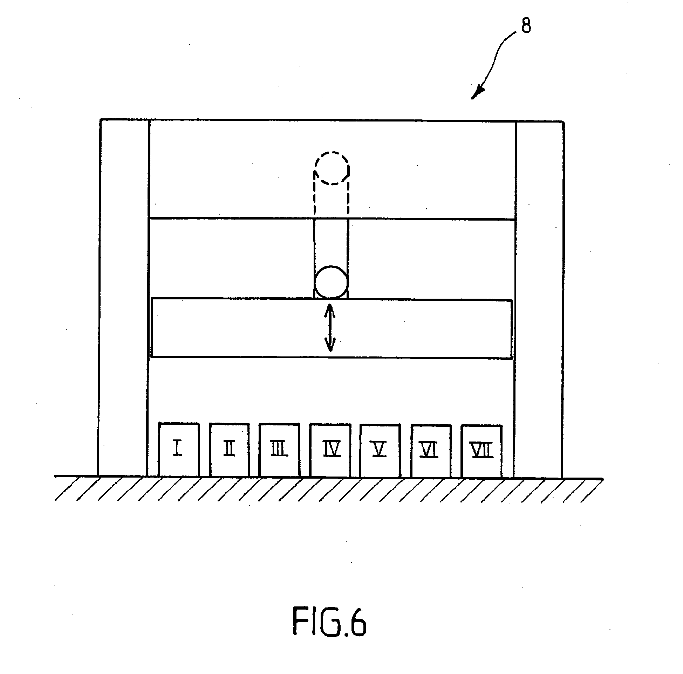

Le procédé de réalisation d'une mâchoire de cardan décrit ci-dessus et représenté sur les figures 1 et 2 comporte les étapes ci-après :
- la découpe d'une tôle épaisse 7 avec un surplus de matière avec des formes pour les quatre appendices 27, 28, 29 et 30,
- le traitement thermique adapté à la résistance recherchée,
- différentes opérations sur une presse transfert 8 représentée à la figure 6 :
   1. le décalage des deux bras d'articulation 11, 12 vers le haut sur un support I,
   2. le poinçonnage du trou 13, 14 de chacun des deux bras 11, 12 sur un support II,
   3. le déplacement de la matière par emboutissage vers la position voulue des quatre formes pour les appendices sur un support III,
   4. le poinçonnage de chacun des deux trous de serrage 25, 24, l'un des deux trous 25 ayant un diamètre de passage pour recevoir la vis, et l'autre trou 4 étant plus petit pour réaliser l'appendice 26 de renforcement obtenu par soyage avant taraudage sur un support IV,
   5. le déplacement de la matière par soyage pour obtenir l'appendice de renforcement 26 du trou de serrage 24 sur un support V,
   6. le pliage vers le bas pour rapprocher les deux portions de serrage 21, 22 avec leur bras d'articulation 11, 12 correspondant les uns par rapport aux autres à 60° environ sur un support VI,
   7. la frappe sur chacune des deux portions de serrage 21, 22, pour avoir la forme définitive avec les deux portions de serrage 21, 22 et les deux bras d'articulation 11, 12 parallèles les uns par rapport aux autres, sur un support VII.

Selon l'invention, ladite mâchoire de cardan peut être disposée dans une colonne de direction à une des extrémités ou à chaque extrémité de la partie intermédiaire.
La mâchoire de cardan peut ainsi être utilisée dans une colonne de direction avec une assistance électrique disposée sur la partie haute de colonne.

Ainsi la mâchoire en tôle emboutie selon l'invention a des caractéristiques de tenue au serrage et à la résistance du taraudage, qui sont grandement supérieures à une mâchoire emboutie classique.

Les zones destinées à renforcer la mâchoire ne sont plus obtenues par pliage mais par déformation, ce qui se traduit par des zones d'appui homogènes résistant mieux à la compression due au serrage de la vis sous un couple élevé.

Toutes les zones d'appui sont définies de telle sorte que les opérations d'usinage sont plus fiables et les opérations d'ébavurages très simplifiées.

Les deux appendices de renforcement 27 et 28, les deux portions de serrage 21 et 22 ainsi que la portion de jonction 23 se terminent par une face commune transversale, qui est l'opposé de deux bras d'articulation 11 et 12 de la fourche d'articulation 1. Ladite face commune est une face transversale d'extrémité 41 qui comprend la face transversale d'extrémité 43 de l'appendice de renforcement 27 et la face transversale d'extrémité 44 de l'appendice de renforcement 28.
Les deux faces transversales d'extrémité 43 et 44 sont confondues avec la face transversale d'extrémité 41 ou disposées à proximité de ladite face 41.

Les deux appendices de renforcement 29 et 30, les deux portions de serrage 21 et 22 ainsi que la portion de jonction 23 se terminent par une face commune transversale, qui est située du côté des deux bras d'articulation 11 et 12 de la fourche d'articulation. Ladite face commune est une face transversale d'extrémité 42 qui comprend : la face transversale d'extrémité 45 de l'appendice de renforcement 29, et la face transversale d'extrémité 46 de l'appendice de renforcement 30. Les deux faces transversales d'extrémité 45 et 46 sont disposées à proximité de la face transversale d'extrémité 42 ou confondues avec ladite face 42.

Cette caractéristique de l'invention permet d'avoir une meilleure résistance à la déformation plastique lors du serrage et un meilleur accostage sur le pignon de crémaillère de direction, lors de l'assemblage du véhicule. Cette caractéristique est fondamentale lors du serrage et de la transmission de couples de rotation élevés sur la colonne de direction. En effet, selon l'invention comme cela a été décrit, la déformation de la tôle 7 se fait sans rupture des fibres de la matière constituant cette tôle, c'est-à-dire sans aucun pliage.

Dans un mode de réalisation, les appendices 29 et 30 sont réalisés par un découpage partiel de la tôle. Ce découpage est agencé pour optimiser la tenue sur le pignon.
Les deux appendices de renforcement 27 et 28 sont obtenus par emboutissage, de manière à assurer la continuité de la matière, en repoussant le surplus de matière vers l'intérieur de l'élément de raccordement 2. Les deux appendices de renforcement 29 et 30 sont obtenus par emboutissage à partir de l'épaisseur de la tôle, ce qui enfonce la matière vers l'intérieur de l'élément de raccordement 2 pour assurer la continuité de la matière, comme cela est illustré sur les figures 1 à 4.

## Revendications

1. Mâchoire de cardan d'un arbre de transmission de mouvement (5), comprenant un axe d'articulation (3) de la mâchoire et un axe de serrage (4) sur l'arbre de transmission (5), ladite mâchoire étant constituée d'une seule pièce monobloc réalisée par emboutissage et obtenue par la déformation d'une tôle (7) dont l'épaisseur est définie pour respecter les fonctions de tenue et de résistance dans des zones à faible contrainte, et comportant:
. une fourche d'articulation (1) constituée par deux bras d'articulation (11, 12) comportant chacun un trou de passage (13, 14) dont l'axe est l'axe d'articulation 3 du croisillon,
. un élément de raccordement (2) à l'arbre de transmission de mouvement (5), ledit élément de raccordement (2) étant constitué par deux portions de serrage (21, 22) reliées l'une à l'autre par une portion de jonction (23), chacune des deux portions de serrage (21, 22) comportant un trou de serrage (25, 24) dont l'axe est l'axe de serrage (4), et
. des appendices pour renforcer des zones à forte contrainte dudit élément de raccordement, **caractérisée en ce que** lesdits appendices de renforcement (27, 28, 29, 30) sont réalisés par emboutissage à partir de surplus de matière prévus dans ladite tôle avant emboutissage à proximité des zones à renforcer, et lesdits appendices sont agencés à proximité d'une face transversale d'extrémité correspondante (41, 42) dudit élément de raccordement (2), de manière que la déformation par emboutissage de ladite tôle (7) se fasse sans rupture des fibres de la matière la constituant, sans aucun pliage desdits appendices formés (27, 28, 29, 30) issus des surplus de matière, afin que ladite mâchoire soit constituée uniquement de fibres continues, avec l'épaisseur désirée pour chacune des zones à forte contrainte et à faible contrainte.

2. Mâchoire de cardan selon la revendication 1, **caractérisée en ce que** ladite mâchoire de cardan comporte au moins un appendice de renforcement (27, 28, 29, 30) disposé sur une portion de serrage (21, 22) au voisinage du trou de serrage (25, 24), et à proximité de la face transversale d'extrémité correspondante (41, 42).

3. Mâchoire de cardan selon la revendication 1, **caractérisée en ce que** ladite mâchoire de cardan comporte deux appendices de renforcement (27,28 - 29,30), chaque appendice de renforcement étant disposé sur la portion de serrage correspondante (21, 22) au voisinage et du même côté du trou de serrage (25, 24), et à proximité de la face transversale d'extrémité correspondante (41, 42), de manière à se faire face l'un par rapport à l'autre.

4. Mâchoire de cardan selon la revendication 1, **caractérisée en ce que** ladite mâchoire de cardan comporte deux appendices de renforcement (27,29 - 28,30), qui sont disposés sur la même portion de serrage (21, 22) au voisinage et de part et d'autre du trou de serrage (25, 24), et à proximité de la face transversale d'extrémité correspondante (41, 42).

5. Mâchoire de cardan selon la revendication 1, **caractérisée en ce que** ladite mâchoire de cardan comporte deux appendices de renforcement (27,30 - 28,29), un appendice de renforcement (27,29 - 28,30) étant disposé sur une des portions de serrage (21, 22) au voisinage et d'un côté du trou de serrage (25, 24), l'autre appendice de renforcement (30,28 - 29,27) étant disposé sur l'autre portion de serrage (22, 21) au voisinage et de l'autre côté du trou de serrage (24, 25), les deux appendices de renforcement étant disposés à proximité de la face transversale d'extrémité correspondante (41, 42).

6. Mâchoire de cardan selon la revendication 1, **caractérisée en ce que** ladite mâchoire de cardan comporte :
- deux appendices de renforcement (27, 28), chaque appendice de renforcement étant agencé par emboutissage sur la portion de serrage correspondante (21, 22) au voisinage et du même côté du trou de serrage (25, 24), de manière à se faire face l'un par rapport à l'autre, et à proximité de la face transversale d'extrémité (41),
- deux autres appendices de renforcement (29, 30), chaque appendice de renforcement étant agencé par emboutissage sur la portion de serrage correspondante (21, 22) au voisinage et de l'autre côté du trou de serrage (25, 24), de manière à se faire face l'un par rapport à l'autre, et à proximité de la face transversale d'extrémité (42).

7. Mâchoire de cardan selon la revendication 1, **caractérisée en ce que** ladite mâchoire de cardan comporte :
- deux appendices de renforcement (27, 28), chaque appendice de renforcement étant agencé par emboutissage sur la portion de serrage correspondante (21, 22) au voisinage et du même côté du trou de serrage (25, 24), de manière à se faire face l'un par rapport à l'autre, et dont les faces transversales d'extrémité (43, 44) se confondent avec la face transversale d'extrémité (41),
- deux autres appendices de renforcement (29, 30), chaque appendice de renforcement étant agencé par emboutissage sur la portion de serrage correspondante (21, 22) au voisinage et de l'autre côté du trou de serrage (25, 24), de manière à se faire face l'un par rapport à l'autre, et dont les faces transversales d'extrémité (45, 46) se confondent avec la face transversale d'extrémité (42).

8. Mâchoire de cardan selon la revendication 2, **caractérisée en ce que** l'appendice de renforcement (27, 28, 29, 30) a une section évolutive qui diminue à partir de la portion de serrage (21, 22) sur laquelle il est agencé.

9. Mâchoire de cardan selon la revendication 1, **caractérisée en ce que** l'un des trous de serrage (24), destiné à recevoir un taraudage, est entouré d'un appendice de renforcement (26) sur la face externe de la portion de serrage correspondante (22), ledit appendice de renforcement (26) étant obtenu par soyage à partir d'un trou plus petit.

10. Mâchoire de cardan selon l'une des revendications 3 et 6, **caractérisée en ce que** les deux appendices (27,28 - 29,30) qui se font face constituent avec chacune des portions de serrage (21, 22), et avec la portion de jonction (23), le logement de l'arbre de transmission de mouvement (5).

11. Mâchoire de cardan selon la revendication 10, **caractérisée en ce que** les deux appendices qui se font face (27,28 - 29,30) et la portion de jonction (23) ont leurs faces internes (31, 32, 33, 34, 37) qui sont circulaires et qui sont raccordées par chacune des faces internes (35, 36) des portions de serrage (21, 22), de manière que ces faces internes (31, 32, 33, 34, 35, 36, 37) aient des dimensions et des formes correspondantes aux dimensions et à la forme de l'arbre de transmission (5) qui comporte deux parties circulaires raccordées par deux méplats.

12. Mâchoire de cardan selon la revendication 11, **caractérisée en ce que** ladite mâchoire comporte :
- la fourche d'articulation (1) qui est constituée par les deux bras d'articulation (11, 12) disposés de part et d'autre et symétriquement par rapport à l'axe de transmission (6) de l'arbre (5), et comportant chacun le trou de passage (13, 14) dont l'axe est l'axe d'articulation (3),
- l'élément de raccordement (2) qui est constitué par les deux portions de serrage (21, 22) disposées de part et d'autre et symétriquement par rapport à l'axe de transmission (6), et reliées l'une à l'autre par la portion de jonction (23), et comportant chacune le trou de serrage (25, 24) dont l'axe est l'axe de serrage (4),
- chacun des deux bras d'articulation (11, 12) étant décalé et raccordé à la portion de serrage correspondante (21, 22) en s'écartant de l'axe de transmission (6),
- les quatre appendices de renforcement (27, 28, 29, 30), les deux appendices de renforcement (27, 28) se faisant face et disposés du même côté et à proximité du trou de serrage (25, 24), les deux autres appendices de renforcement (29, 30) se faisant face, et disposés de l'autre côté et à proximité du trou de serrage (25, 24), chacun des appendices de renforcement (27, 28, 29, 30) étant raccordé à la portion de serrage correspondante (21, 22), de manière à réaliser avec la portion de jonction (23) deux logements qui ont des formes internes conjuguées avec la forme de l'arbre de transmission,
- l'un des trous de serrage (24), destiné à recevoir un taraudage, est entouré d'un appendice de renforcement (26) sur la face externe de la portion de serrage correspondante (22).

13. Procédé de réalisation d'une mâchoire de cardan selon la revendication 12, **caractérisé en ce qu'**il comporte les étapes ci-après :
- découpe d'une tôle épaisse (7) avec un surplus de matière avec des formes pour les quatre appendices (27, 28, 29, 30),
- traitement thermique adapté à la résistance recherchée,
- opération sur une presse transfert (8) :
1. décalage des deux bras d'articulation (11, 12) vers le haut,
2. poinçonnage du trou (13, 14) de chacun des deux bras (11, 12),
3. déplacement de la matière par emboutissage vers la position voulue des quatre formes pour les appendices,
4. poinçonnage de chacun des deux trous de serrage (25, 24), l'un des deux trous (25) ayant un diamètre de passage pour recevoir la vis, et l'autre trou (24) étant plus petit pour réaliser l'appendice (26) de renforcement obtenu par soyage avant taraudage,
5. déplacement de la matière par soyage pour obtenir l'appendice de renforcement (26) du trou de serrage (24),
6. pliage vers le bas pour rapprocher les deux portions de serrage (21, 22) avec leur bras d'articulation (11, 12) correspondant les uns par rapport aux autres à 60° environ,
7. frappe sur chacune des deux portions de serrage (21, 22), pour avoir la forme définitive avec les deux portions de serrage (21, 22) et les deux bras d'articulation (11, 12) parallèles les uns par rapport aux autres.

14. Colonne de direction comportant une partie haute qui est reliée à un volant de direction et une partie intermédiaire à au moins l'une des extrémités de laquelle est disposée une mâchoire de cardan selon l'une des revendications 1 à 12.

15. Colonne de direction selon la revendication précédente, **caractérisée en ce qu'**elle est à assistance électrique sur la partie haute de colonne.

## Claims

1. A yoke member of Cardan joint of a motion transmission shaft (5) including a yoke member pivot axis (3) and a tightening axis (4) on the transmission shaft (5), said yoke member being made in one unitary part through stamping and obtained through deforming a metal sheet (7), the thickness of which is so defined as to meet the holding and strength functions in lowly stressed regions, and comprising:
. a pivot fork (1) including two pivot arm portions (11, 12) each comprising a crossing hole (13, 14), the axis of which is the pivot axis 3 of the cross-piece,
. a connecting element (2) for the motion transmission shaft (5), said connecting element (2) having two tightening portions (21, 22) connected one to the other via a junction portion (23), each of the two tightening portions (21, 22) comprising a tightening hole (25, 24), the axis of which is the tightening axis (4),
. appendices for reinforcing the highly stressed regions of said connecting element,
**characterized in that** said reinforcing appendices (27, 28, 29, 30) are made by stamping from a material excess provided in said metal sheet before stamping proximate the regions to be reinforced, and said appendices are arranged proximate a corresponding transversal end face (41, 42) of said connecting element (2), so that deforming said metal sheet (7) through stamping occurs without any breaking of the material fibers making up such metal sheet, without any folding of said appendices formed from the material excess, so that said yoke member is only made up of continuous fibers with the desired thickness for each of the highly stressed and lowly stressed regions.

2. A yoke member of Cardan joint as defined in claim 1, **characterized in that** said yoke member of Cardan joint includes at least one reinforcing appendix (27, 28, 29, 30) arranged on a tightening portion (21, 22) in the vicinity of the tightening hole (25, 24), and proximate the corresponding transversal end face (41,42).

3. A yoke member of Cardan joint as defined in claim 1, **characterized in that** said yoke member of Cardan joint includes two reinforcing appendices (27,28 - 29,30), each reinforcing appendix being arranged on the corresponding tightening portion (21, 22) in the vicinity and on the same side of the tightening hole (25, 24), and proximate the corresponding transversal end face (41, 42), thereby to be opposite one relative to the other.

4. A yoke member of Cardan joint as defined in claim 1, **characterized in that** said yoke member of Cardan joint includes two reinforcing appendices (27,29 - 28,30) which are arranged on the same tightening portion (21, 22) in the vicinity and on both sides of the tightening hole (25, 24), and proximate the corresponding transversal end face (41, 42).

5. A yoke member of Cardan joint as defined in claim 1, **characterized in that** said yoke member of Cardan joint includes two reinforcing appendices (27,30 - 28,29), one reinforcing appendix (27,29 - 28,30) being arranged on one of the tightening portions (21, 22) in the vicinity and on one side of the tightening hole (25, 24), and the other reinforcing appendix (30,28 - 29,27) being arranged on the other tightening portion (21, 22) in the vicinity and on the other side of the tightening hole (24, 25), the two reinforcing appendices being arranged proximate the corresponding transversal end face (41, 42).

6. A yoke member of Cardan joint as defined in claim 1, **characterized in that** said yoke member of Cardan joint includes:
- two reinforcing appendices (27, 28), each reinforcing appendix being arranged through stamping on the corresponding tightening portion (21, 22) in the vicinity and on the same side of the tightening hole (25, 24), thereby to be opposite one relative to the other and in the vicinity of the transversal end face (41),
- two other reinforcing appendices (29, 30), each reinforcing appendix being arranged through stamping on the corresponding tightening portion (21, 22) in the vicinity and on the same side of the tightening hole (25, 24), thereby to be opposite one relative to the other and in the vicinity of the transversal end face (42).

7. A yoke member of Cardan joint as defined in claim 1, **characterized in that** said yoke member of Cardan joint includes:
- two reinforcing appendices (27, 28), each reinforcing appendix being arranged through stamping on the corresponding tightening portion (21, 22) in the vicinity and on the same side of the tightening hole (25, 24), thereby to be opposite one relative to the other, and the transversal end faces (43, 44) of which are merged with the transversal end face (41),
- two other reinforcing appendices (29, 30), each reinforcing appendix being arranged through stamping on the corresponding tightening portion (21, 22) in the vicinity and on the same side of the tightening hole (25, 24), thereby to be opposite one relative to the other, and the transversal end faces (45, 46) of which are merged with the transversal end face (42).

8. A yoke member of Cardan joint as defined in claim 2, **characterized in that** the reinforcing appendix (27, 28, 29, 30) has a tapering section decreasing from the tightening portion (21, 22) on which it is arranged.

9. A yoke member of Cardan joint as defined in claim 1, **characterized in that** one of the tightening holes (24), intended to accommodate a screw tapping, is surrounded with a reinforcing appendix (26) on the external face of the corresponding tightening portion (22), said reinforcing appendix (26) being obtained through plunging starting from a smaller hole.

10. A yoke member of Cardan joint as defined in one of claims 3 and 6, **characterized in that** the two opposite appendices (27,28 - 29,30) make up, together with each of the tightening portions (21, 22) and with the junction portion (23), the housing of the motion transmission shaft (5).

11. A yoke member of Cardan joint as defined in claim 10, **characterized in that** the two opposite appendices (27,28 - 29,30) and the junction portion (23) have their internal faces (31, 32, 33, 34, 37) which are circular and which are connected by each of the internal faces (35, 36) of the tightening portions (21, 22), so that said internal faces (31, 32, 33, 34, 35, 36, 37) have dimensions and shapes matching the dimensions and the shape of the transmission shaft (5) which comprises two circular portions connected by two lands.

12. A yoke member of Cardan joint as defined in claim 11, **characterized in that** said yoke member includes:
- the pivot fork (1) including the two pivot arm portions (11, 12) arranged on both sides and symmetrically with respect to the transmission axis (6) of the shaft (5) and each comprising the crossing hole (13, 14), the axis of which is the pivot axis (3),
- the connecting element (2) including the two tightening portions (21, 22) arranged on both sides and symmetrically with respect to the transmission axis (6), connected one to each other by the junction portion (23), and each comprising the tightening hole (25, 24), the axis of which is the tightening axis (4),
- each of the two pivot arm portions (11, 12) being offset and connected to the corresponding tightening portion (21, 22) by diverging from the transmission axis (6),
- the four reinforcing appendices (27, 28, 29, 30), the two reinforcing appendices (27, 28) being opposite and arranged on the same side and in the vicinity of the tightening hole (25, 24), the two other reinforcing appendices (29, 30) being opposite one relative to the other and arranged on the other side and in the vicinity of the tightening hole (25, 24), each of the reinforcing appendices (27, 28, 29, 30) being connected to the corresponding tightening portion (21, 22), so as to achieve, with the junction portion (23), two housings with internal shapes conjugated with the shape of the transmission shaft,
- one of the tightening holes (24), intended to accommodate a screw tapping, is surrounded with a reinforcing appendix (26) on the external face of the corresponding tightening portion (22).

13. A method of manufacturing a yoke member of Cardan joint as defined in claim 12, **characterized in that** it includes the following steps of:
- cutting a thick metal sheet (7) with an excess of material with shapes for all four appendices (27, 28, 29, 30),
- heat treating depending on the desired strength,
- operating on a transfer press (8) :
1. offsetting the two pivot arm portions (11, 12) upwards,
2. punching the hole (13, 14) of each of the two arm portions (11, 12),
3. shifting material through stamping to the desired position of all four shapes for the appendices,
4. punching each of the two tightening holes (25, 24), one of the two holes (25) having a crossing diameter for accommodating the screw, and the other hole (24) being smaller so as to achieve the reinforcing appendix (26) obtained through plunging before screw tapping,
5. shifting material through plunging so as to obtain the reinforcing appendix (26) of the tightening hole (24),
6. folding downwards so as to bring closer the two tightening portions (21, 22) with their corresponding pivot arm portion (11, 12) at approximately 60° relative to each other,
7. hitting each of the two tightening portions (21, 22), so as to obtain the final shape with the two tightening portions (21, 22) and the two pivot arm portions (11, 12) parallel to each other.

14. A steering column comprising a top portion which is connected to a steering wheel and a middle portion, a yoke member of Cardan joint being arranged at at least one end of said middle portion, as defined in one of claims 1 to 12.

15. A steering column as defined in the previous claim, **characterized in that** it is equipped with an electric assistance on the top portion of the column.

## Patentansprüche

1. Kardangelenk einer Welle zur Übertragung von Bewegungen (5), umfassend eine Gelenkachse (3) des Gelenks und eine Spannachse (4) auf der Übertragungswelle (5), wobei das Gelenk aus einem einzigen Stück aus einem Block besteht, hergestellt durch Tiefziehen und erhalten durch die Verformung einen Blechs (7), dessen Dicke definiert ist, um die Funktionen des Verhaltens und der Widerstandskraft in den Bereichen mit geringer Beanspruchung zu berücksichtigen; und umfassend:
- eine Gelenkgabel (1), bestehend aus zwei Gelenkarmen (11, 12), wobei jeder ein Durchgangsloch (13, 14) aufweist, dessen Achse die Gelenkachse (3) des Zapfenkreuzes ist,
- ein Verbindungselement (2) der Welle zur Übertragung von Bewegungen (5), wobei das Verbindungselement (2) aus zwei Spannabschnitten (21, 22) besteht, die durch einen Verbindungsabschnitt (23) miteinander verbunden sind, wobei jeder der zwei Spannabschnitte (21, 22) ein Spannloch (25, 24) aufweist, dessen Achse die Spannachse (4) ist, und
- Ansätze, um Bereiche mit starker Beanspruchung des Verbindungselements zu verstärken, **dadurch gekennzeichnet, dass** die Verstärkungsansätze (27, 28, 29, 30) durch Tiefziehen aus dem überschüssigen Material, vorgesehen im Blech, vor dem Tiefziehen in der Nähe der zu verstärkenden Bereiche gebildet sind, und wobei die Ansätze in der Nähe einer entsprechenden Endquerseite (41, 42) des Verbindungselements (2) angeordnet sind, so dass die Verformung durch Tiefziehen des Blechs (7) ohne Bruch der Fasern des Materials, aus dem es besteht, erfolgt, ohne eine Biegung der gebildeten Ansätze (27, 28, 29, 30), die aus dem überschüssigen Material stammen, so dass das Gelenk ausschließlich aus kontinuierlichen Fasern mit der gewünschten Dicke für jeden der Bereiche mit starker Beanspruchung und mit geringer Beanspruchung besteht.

2. Kardangelenk nach Anspruch 1, **dadurch gekennzeichnet, dass** das Kardangelenk mindestens einen Verstärkungsansatz (27, 28, 29, 30) umfasst, der auf einem Spannabschnitt (21, 22) in der Nähe des Spannlochs (25, 24) und in der Nähe der entsprechenden Endquerseite (41, 42) angebracht ist.

3. Kardangelenk nach Anspruch 1, **dadurch gekennzeichnet, dass** das Kardangelenk zwei Verstärkungsansätze (27, 28 - 29, 30) umfasst, wobei jeder Verstärkungsansatz auf dem entsprechenden Spannabschnitt (21, 22) in der Nähe und auf der gleichen Seite des Spannlochs (25, 24) und in der Nähe der der entsprechenden Endquerseite (41, 42) angebracht ist, so dass sie einander gegenüber liegen.

4. Kardangelenk nach Anspruch 1, **dadurch gekennzeichnet, dass** das Kardangelenk zwei Verstärkungsansätze (27, 29 - 28, 30) umfasst, die auf dem gleichen Spannabschnitt (21, 22) in der Nähe und auf beiden Seiten des Spannlochs (25, 24) und in der Nähe entsprechenden Endquerseite (41, 42) angebracht sind.

5. Kardangelenk nach Anspruch 1, **dadurch gekennzeichnet, dass** das Kardangelenk zwei Verstärkungsansätze (27, 30 - 28, 29) umfasst, wobei ein Verstärkungsansatz (27, 29 - 28, 30) auf einem der Spannabschnitte (21, 22) in der Nähe und auf einer Seite des Spannlochs (25, 24) angebracht ist, wobei der andere Verstärkungsansatz (30, 28 - 29, 27) auf dem anderen Spannabschnitt (22, 21) in der Nähe und auf der andern Seite des Spannlochs (24, 25) angebracht ist, wobei die zwei Verstärkungsansätze in der Nähe der entsprechenden Endquerseite (41, 42) angebracht sind.

6. Kardangelenk nach Anspruch 1, **dadurch gekennzeichnet, dass** das Kardangelenk Folgendes umfasst:
- zwei Verstärkungsansätze (27, 28), wobei jeder Verstärkungsansatz durch Tiefziehen auf dem entsprechenden Spannabschnitt (21, 22) in der Nähe und auf der gleichen Seite des Spannlochs (25, 24) angebracht ist, so dass sie einander gegenüber liegen sowie in der Nähe Endquerseite (41).
- zwei andere Verstärkungsansätze (29, 30), wobei jeder Verstärkungsansatz durch Tiefziehen auf dem entsprechenden Spannabschnitt (21, 22) in der Nähe und auf der anderen Seite des Spannlochs (25, 24) angebracht ist, so dass sie einander gegenüber liegen sowie in der Nähe der Endquerseite (42).

7. Kardangelenk nach Anspruch 1, **dadurch gekennzeichnet, dass** das Kardangelenk Folgendes umfasst:
- zwei Verstärkungsansätze (27, 28), wobei jeder Verstärkungsansatz durch Tiefziehen auf dem entsprechenden Spannabschnitt (21, 22) in der Nähe und auf der gleichen Seite des Spannlochs (25, 24) angebracht ist, so dass sie einander gegenüber liegen, und wobei sich die Endquerseiten (43, 44) mit der Endquerseite (41) vermischen,
- zwei andere Verstärkungsansätze (29, 30), wobei jeder Verstärkungsansatz durch Tiefziehen auf dem entsprechenden Spannabschnitt (21, 22) in der Nähe und auf der gleichen Seite des anderen Spannlochs (25, 24) angebracht ist, so dass sie einander gegenüber liegen, und wobei sich die Endquerseiten (45, 46) mit der Endquerseite (42) vermischen,

8. Kardangelenk nach Anspruch 2, **dadurch gekennzeichnet, dass** der Verstärkungsansatz (27, 28, 29, 30) einen sich verändernden Abschnitt aufweist, der sich ab dem Spannabschnitt (21, 22), auf dem er angeordnet ist, verkleinert.

9. Kardangelenk nach Anspruch 1, **dadurch gekennzeichnet, dass** eines der Spannlöcher (24), das dazu vorgesehen ist, eine Gewindebohrung aufzunehmen, von einem Verstärkungsansatz (26) auf der Außenseite des entsprechenden Spannabschnitts (22) umgeben ist, wobei der Verstärkungsansatz (26) durch Stechen aus einem kleineren Loch erhalten wird.

10. Kardangelenk nach einem der Ansprüche 3 und 6, **dadurch gekennzeichnet, dass** die zwei Ansätze (27, 28 - 29, 30), die einander gegenüber liegen, mit jedem der Spannabschnitte (21, 22) und mit dem Verbindungsabschnitt (23) die Lagerung der Welle zur Übertragung der Bewegung (5) bilden.

11. Kardangelenk nach Anspruch 10, **dadurch gekennzeichnet, dass** die zwei Ansätze, die einander gegenüber liegen (27, 28 - 29, 30), und der Verbindungsabschnitt (23) Innenseiten (31, 32, 33, 34, 37) aufweisen, die rund sind, und die durch jede der Innenseiten (35, 36) der Spannabschnitte (21, 22) miteinander verbunden sind, so dass diese Innenseiten (31, 32, 33, 34, 35, 36, 37) Abmessungen und Formen aufweisen, die den Abmessungen und der Form der Übertragungswelle (5) entsprechen, die zwei runde Teile umfasst, die durch zwei Flachstellen verbunden sind.

12. Kardangelenk nach Anspruch 11, **dadurch gekennzeichnet, dass** das Kardangelenk Folgendes umfasst:
- die Gelenkgabel (1), die aus den zwei Gelenkarmen (11, 12) besteht, die auf jeder Seite und symmetrisch bezüglich der Übertragungsachse (6) der Welle (5) angebracht sind und jeweils das Durchgangsloch (13, 14) umfassen, dessen Achse die Gelenkachse (3) ist,
- das Verbindungselement (2), das aus den zwei Spannabschnitten (21, 22) besteht, die auf beiden Seiten und symmetrisch bezüglich der Übertragungsachse (6) angebracht sind und miteinander durch die Verbindung (23) verbunden sind und jeweils das Durchgangsloch (25, 24) umfassen, dessen Achse die Spannachse (4) ist,
- wobei jeder der zwei Gelenkarme (11, 12) verschoben und mit dem entsprechenden Spannabschnitt (21, 22) verbunden ist, indem er sich von der Übertragungsachse (6) entfernt,
- die vier Verstärkungsansätze (27, 28, 29, 30), die zwei Verstärkungsansätze (27, 28), die einander gegenüber liegen und auf der gleichen Seite und in der Nähe des Spannlochs (25, 24) angebracht sind, die zwei anderen Verstärkungsansätze (29, 30), die einander gegenüber liegen und auf der anderen Seite und in der Nähe des Spannlochs (25, 24) angebracht sind, wobei jeder der Verstärkungsansätze (27, 28, 29, 30) mit dem entsprechenden Spannabschnitt (21, 22) verbunden ist, um mit dem Verbindungsabschnitt (23) zwei Lagerungen zu bilden, die inneren Formen aufweisen, die der Form der Übertragungswelle entsprechen,
- eines der Spannlöcher (24), das dazu vorgesehen ist, eine Gewindebohrung aufzunehmen, von einem Verstärkungsansatz (26) auf der Außenseite des entsprechenden Spannabschnitts (22) umgeben ist.

13. Verfahren zur Herstellung eines Kardangelenks nach Anspruch 12, **dadurch gekennzeichnet, dass** es die folgenden Schritte umfasst:
- Schneiden eines dicken Blechs (7) mit überschüssigem Material mit Formen für die vier Ansätze (27, 28, 29, 30),
- thermische Behandlung, die an die gewünschte Widerstandskraft angepasst ist,
- Bearbeitung auf einer Transferpresse (8):
1. Versetzen der zwei Gelenkarme (11, 12) nach oben,
2. Stanzen des Lochs (13, 14) jedes der zwei Arme (11, 12),
3. Verschieben des Materials durch Tiefziehen in die gewünschte Position der vier Formen für die Ansätze,
4. Stanzen jedes der zwei Spannlöcher (25, 24), wobei eines der zwei Löcher (25) einen Durchgangsdurchmesser aufweist, um die Schraube aufzunehmen, und das andere Loch (24) kleiner ist, um den Verstärkungsansatz (26) zu bilden, der durch Stechen vor der Gewindebohrung erhalten wird.
5. Verschieben des Materials durch Stechen, um den Verstärkungsansatz (26) des Spannlochs (24) zu erhalten.
6. Biegen nach unten, um die zwei Spannabschnitte (21, 22) mit ihrem entsprechenden Gelenkarm (11, 12) ungefähr um 60° aneinander anzunähern,
7. Schlagen auf jeden der zwei Spannabschnitte (21, 22), um die endgültige Form mit den zwei Spannabschnitten (21, 22) und den zwei Gelenkarmen (11, 12), parallel zueinander, zu erhalten.

14. Lenksäule, umfassend einen oberen Teil, der mit einem Lenkrad verbunden ist, und einen Teil der zwischen mindestens einem der Enden liegt, auf dem ein Kardangelenk nach einem der Ansprüche 1 bis 12 angeordnet ist.

15. Lenksäule nach dem vorhergehenden Anspruch, **dadurch gekennzeichnet, dass** sie am oberen Teil der Säule eine elektrische Unterstützung aufweist.
